# EUROPÄISCHE PATENTSCHRIFT

(11) **EP 1 111 362 B1**
(45) Veröffentlichungstag und Bekanntmachung des Hinweises auf die Patenterteilung: **06.12.2006**
(21) Anmeldenummer: 00123541.5
(22) Anmeldetag: 27.10.2000
(51) Int. Cl.: G01M 1/32

(54) **Verfahren und Vorrichtung zum Anbringen eines Unwuchtausgleichsgewichtes durch einen Roboter**
Procedure and device for mounting a balancing weight by means of a robot
Procédé et dispositif de montage d'un poids de compensation de balourd par un robot

(30) Priorität: 21.12.1999 DE 19961828
(43) Veröffentlichungstag der Anmeldung: 27.06.2001
(73) Patentinhaber: Hofmann Maschinen- und Anlagenbau GmbH, 67550 Worms (DE)
(72) Erfinder: Hornung, Volker, Dr.-Ing., 41366 Schwalmtal (DE); Metzger, Jochen, 67133 Maxdorf (DE); Kupka, Heinz, 69502 Hemsbach (DE); Rossmann, Günther, 64686 Lautertal (DE); Wattendorf, Günther, 64625 Bensheim (DE)
(74) Vertreter: Nöth, Heinz

(56) Entgegenhaltungen:
- EP-A- 0 519 162
- WO-A-88/07909
- DE-A- 3 626 911
- DE-B- 1 084 494
- PATENT ABSTRACTS OF JAPAN Bd. 0180, Nr. 64, 2. Februar 1994 (1994-02-02) -& JP 05 281076 A (KOKUSAI KEISOKKI KK), 29. Oktober 1993 (1993-10-29)

## Beschreibung

Die vorliegende Erfindung betrifft ein Verfahren zum Anbringen von Unwuchtausgleichsgewichten an einem Fahrzeugrad sowie eine Vorrichtung zur Durchführung des Verfahrens gemäß den Oberbegriffen der Ansprüche 1 bzw. 9, wie aus JP-5-281 076 A bekannt.

Bei der industriellen Endmontage von Kraftfahrzeugen, Motorrädern und Lastkraftwagen müssen die von Zulieferern angelieferten Reifen auf Felgen aufgezogen und anschließend das so entstandene Rad ausgewuchtet werden. Hierzu wird in der Praxis eine Unwuchtausgleichsstraße verwendet, welche in aller Regel zumindest aus einer Unwuchtmeßstation und einer Unwuchtausgleichsstation besteht, die über eine Förderlinie miteinander verbunden sind. Zum Ausgleich der Unwucht wird dabei ein Rad zunächst mit vertikaler Radachse auf die Förderlinie aufgelegt und zu der Unwuchtmeßstation gefördert. Nach dem Messen der Unwucht in wenigstens zwei Ausgleichsebenen wird das Rad über die Förderlinie zur Unwuchtausgleichsstation transportiert. Hier wird es für den Unwuchtausgleich in einer Pinole angehoben und entsprechend den erforderlichen Unwuchtausgleichspositionen in zwei verschiedenen Ebenen nacheinander in die Ausgleichspositionen eingedreht. Anschließend werden die Gewichteeinsetzwerkzeuge an das Rad herangefahren und die Unwuchtausgleichsgewichte an dem Rad eingesetzt.

Je nach Felgenkonstruktion können die zu verwendenden Gewichte Schlaggewichte, geteilte Gewichte (Feder- und Ausgleichsgewicht) und Klebegewichte sein. Bei den bekannten Unwuchtausgleichsstraßen kann jedoch immer nur eine Gewichtsart eingesetzt werden. Erfordert eine bestimmte Felgenkonstruktion eine andere Gewichtsart, so muß die Unwuchtausgleichsstation umgerüstet werden, wodurch Zeitverluste entstehen, die zu erhöhten Produktionskosten führen.

Ein Verfahren sowie eine Vorrichtung der eingangs genannten Art gehen aus der bereits genannten JP-5-281076 A hervor. Aus dieser Druckschrift ist eine Unwuchtausgleichsstrasse entnehmbar, die eine Messstation sowie eine Unwuchtausgleichsstation umfasst. Nach dem Messen der Unwucht in der Unwuchtmessstation wird das auszuwuchtende Fahrzeugrad zu der Unwuchtausgleichsstation gefördert. Dort sitzt das auszuwuchtende Fahrzeugrad auf einer Halterung, welche einen Drehtisch, einen Motor sowie eine Drehkodiereinrichtung enthält. Das Unwuchtausgleichsgewicht wird mittels eines drei Achsen aufweisenden Roboters eingesetzt.

Es ist Aufgabe der vorliegenden Erfindung, ein Verfahren sowie eine Vorrichtung zum Einsetzen von unterschiedlichen Arten von Unwuchtausgleichsgewichten an Rädern auf einfache Weise mit ein und derselben Vorrichtung ohne Umrüsten zu ermöglichen.

Hinsichtlich des Verfahrens wird die vorstehende Aufgabe durch die Merkmale des Anspruchs 1 gelöst. In den sich daran anschließenden Ansprüchen 2 bis 8 finden sich vorteilhafte Ausgestaltungen des erfindungsgemäßen Verfahrens.

Durch das Vorsehen eines zweiten Gewichteeinsetzwerkzeuges für eine zweite Art von Unwuchtausgleichsgewichten in Verbindung mit dem Roboter, bei dem es sich um einen Industrieroboter handelt, der ein auszuwuchtendes Rad dem ersten Gewichteeinsetzwerkzeug und dem zweiten Gewichteeinsetzwerkzeug zuführt, kann auf einfache und kostengünstige Weise eine Unwuchtausgleichsstraße konzipiert werden, bei der unterschiedliche, aufeinanderfolgende Felgenkonstruktionen unmittelbar hintereinander ausgewuchtet werden können. Hierdurch entfallen etwaige Umrüstzeiten, wie sie beim Stand der Technik notwendig sind, wenn ein Rad mit einer anderen Felgenkonstruktion ausgewuchtet werden soll als das vorausgegangene. Je nach den Anforderungen des Einzelfalles kann aber nicht nur ein erstes und ein zweites Gewichteeinsetzwerkzeug für unterschiedliche Gewichtsarten durch den einer Roboter bedient werden, sondern es können auch weitere Gewichteeinsetzwerkzeuge zum Einsetzen von Unwuchtausgleichsgewichten der gleichen oder einer anderen Art durch ein und denselben Roboter mit auszuwuchtenden Rädern versorgt werden.

Prinzipiell kann das auszuwuchtende Rad mit beliebiger Radachsenorientierung entlang einer Zuführförderlinie zu dem Roboter transportiert werden. Bei den im Stand der Technik bereits bekannten Auswuchtstraßen wird das auszuwuchtende. Rad in aller Regel mit einer vertikal ausgerichteten Radachse entlang der Zuführförderlinie transportiert. Damit das erfindungsgemäße Verfahren auch bei diesen Auswuchtstraßen bei entsprechender Modifizierung dieser bekannten Straße eingesetzt werden kann, ist es vorteilhaft, wenn der Roboter das auszuwuchtende Rad, welches mit im wesentlichen vertikaler Radachse entlang der Zuführförderlinie zu dem Roboter geführt worden ist, dieses ergreift und mit im wesentlichen horizontal verlaufender Radachse den Gewichteeinsetzwerkzeugen zuführt.

Um das präzise Eindrehen des auszuwuchtenden Rades in die Ausgleichsposition in der jeweiligen Ausgleichsebene an einem Gewichteeinsetzwerkzeug sicher bewerkstelligen zu können, hat es sich weiterhin als vorteilhaft erwiesen, wenn der Roboter das auszuwuchtende Rad in einer Zuführförderlinie zu dem Roboter definiert ergreifen kann.

Damit das erfindungsgemäße Verfahren nicht nur hinsichtlich des Zuführens eines Rades zu dem Roboter sondern auch hinsichtlich des Abgebens des Rades stromaufwärts der Gewichteeinsetzwerkzeuge bei bereits vorhandenen Straßen eingesetzt werden kann, ist es weiterhin von Vorteil, daß der Roboter das Rad mit im wesentlichen vertikal verlaufender Radachse an eine Austragsförderlinie nach dem Durchlauf durch die Gewichteeinsetzwerkzeuge abgeben kann.

Bei den im Stand der Technik bekannten Gewichteeinsetzwerkzeugen wird das Werkzeug zum Einsetzen bzw. Anbringen des Unwuchtausgleichsgewichtes zu dem Rad verfahren, nachdem das Rad durch eine Handhabungseinrichtung in die Gewichteeinsetzposition gebracht worden ist. Da bei dem erfindungsgemäßen Verfahren das Rad bereits von dem Roboter ergriffen worden ist, der selbst über mehrere Achsen bewegbar ist, ist es weiterhin vorteilhaft, daß der Roboter das Rad für das Einsetzen des Unwuchtausgleichsgewichts an das jeweilige vorzugsweise unbewegliche Gewichteeinsetzwerkzeug heranführt, nachdem die Handhabungseinrichtung das Rad in eine Position an dem Gewichteeinsetzwerkzeug gebracht hat, die der vorstehend im Zusammenhang mit dem Stand der Technik erläuterten Gewichteinsetzposition entspricht. Mit anderen Worten ist erfindungsgemäß eine kinematische Umkehr im Vergleich zu der Vorgehensweise beim Stand der Technik vorgesehen.

Grundsätzlich kann das erste und das zweite Gewichteeinsetzwerkzeug in einer beliebigen Orientierung zueinander angeordnet sein, beispielsweise auf einer Kreislinie um den Roboter. Eine besonders kompakte Gestaltung einer Vorrichtung zur Durchführung des erfindungsgemäßen Verfahrens kann dadurch erzielt werden, wenn das erste und das zweite Gewichteeinsetzwerkzeug nebeneinander angeordnet werden. Um den unterschiedlichen Produktionserfordernissen angepaßt werden zu können, hat es sich weiterhin als vorteilhaft erwiesen, wenn die Gewichteeinsetzwerkzeuge in ihrer vorzugsweise horizontalen Position zueinander einstellbar sind. Die Verschiebbarkeit der Gewichteeinsetzwerkzeuge zueinander (in ihrer horizontalen und/oder vertikalen Position) kann auch dazu benutzt werden, daß ein Gewichteeinsetzwerkzeug in eine Außerbetriebsposition (z.B. zum Nachfüllen des Gewichtemagazins) verfahren werden kann, während das oder die anderen Gewichteeinsetzwerkzeuge weiterhin Gewichte an auszuwuchtenden Rädern anbringen.

Hinsichtlich der Vorrichtung wird die vorstehende Aufgabe durch die Merkmale des Anspruchs 9 gelöst. In den sich daran anschließenden Ansprüchen 10 bis 19 finden sich vorteilhafte Weiterbildungen dieser Vorrichtung. Mit der erfindungsgemäßen Vorrichtung lassen sich die gleichen Vorteile erzielen, wie sie vorstehend im Zusammenhang mit dem erfindungsgemäßen Verfahren erläutert worden sind.

Es ist noch zu bemerken, daß die Zuführförderlinie und die Austragsförderlinie je nach den Gegebenheiten in der jeweiligen Maschinenhalle angeordnet werden können. Ein besonders effizienter Bewegungsweg für den Roboter ergibt sich, wenn die Zuführförderlinie und die Austragsförderlinie mit einem Abstand parallel zueinander angeordnet sind, wobei in dem Abstand die Gewichteeinsetzwerkzeuge plaziert sind.

Zur Unterstützung der Automatisation des Betriebes der erfindungsgemäßen Vorrichtung kann weiterhin vorgesehen sein, daß der Roboter mit einer Steuereinrichtung verbunden ist, die die Ausgleichsdaten für eine auszuwuchtendes Rad aus einer Unwuchtmeßeinrichtung empfängt.

Weitere vorteilhafte Ausgestaltungen sowie ein Ausführungsbeispiel des erfindungsgemäßen Verfahrens und der erfindungsgemäßen Vorrichtung werden nachstehend im Zusammenhang mit den beiliegenden Zeichnungsfiguren erläutert. Hierbei ist zu bemerken, daß die in Verbindung mit der Beschreibung des Ausführungsbeispiels verwendeten Begriffe "oben", "unten", "rechts" und "links" sich auf die Ausrichtung der Zeichnungsfiguren in Betrachtungslage mit normal lesbaren Figurenbezeichnungen beziehen. Hierbei ist:
- Fig. 1: eine perspektivische Ansicht einer Vorrichtung, bei der ein Roboter der Vorrichtung ein durch eine Zuführförderlinie herantransportiertes, auszuwuchtendes Rad gerade ergriffen hat;
- Fig. 2: eine zu Fig. 1 ähnliche Darstellung, bei der das auszuwuchtende Rad einem ersten Gewichteeinsetzwerkzeug zugeführt worden ist;
- Fig. 3: eine zu Fig. 1 ähnliche Darstellung, bei der das bereits ausgewuchtete Rad durch den Roboter zu einer Austragsförderlinie transportiert wird;
- Fig. 4: eine zu Fig. 1 ähnliche Darstellung, bei der das bereits ausgewuchtete Rad durch der Roboter an die Austragsförderlinie übergeben wird; und
- Fig. 5: eine zu Fig. 2 ähnliche Darstellung, bei der das auszuwuchtende Rad einem zweiten Gewichteeinsetzwerkzeug für eine zweite Gewichtsart durch den Roboter zugeführt worden ist.

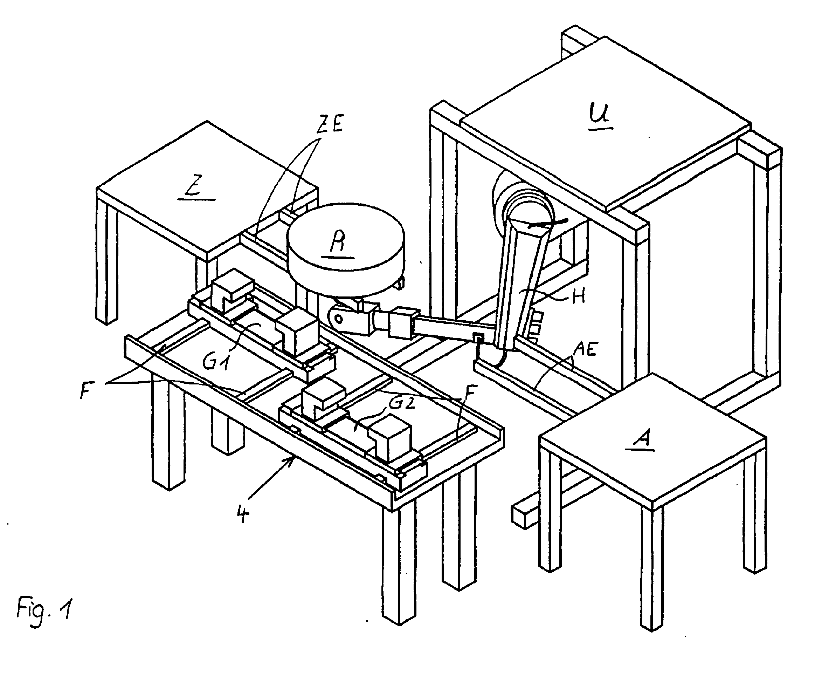

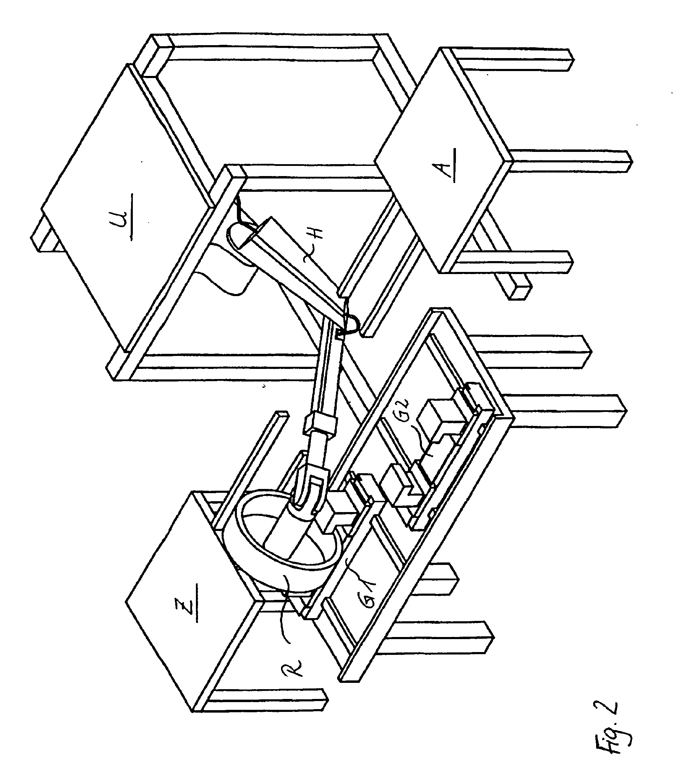

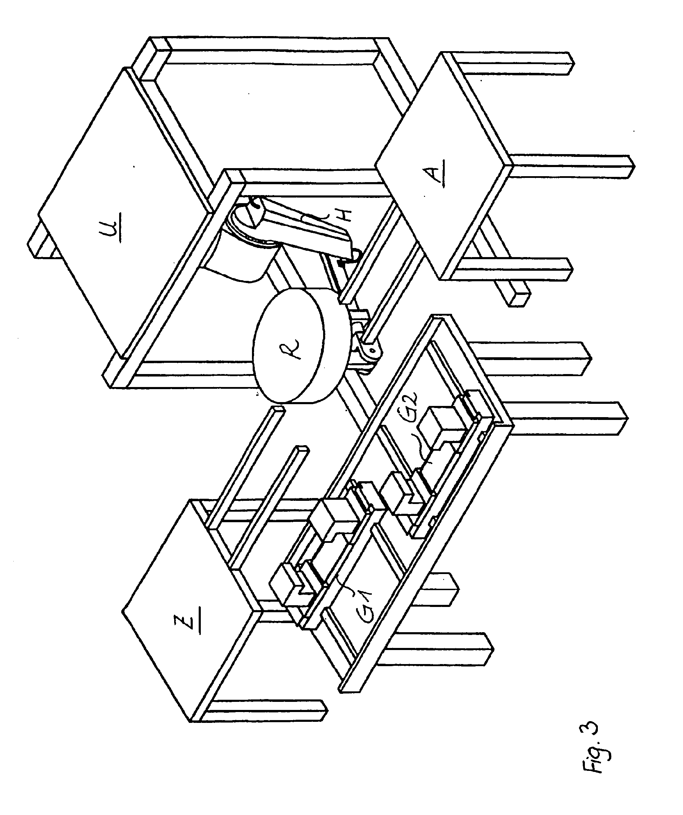

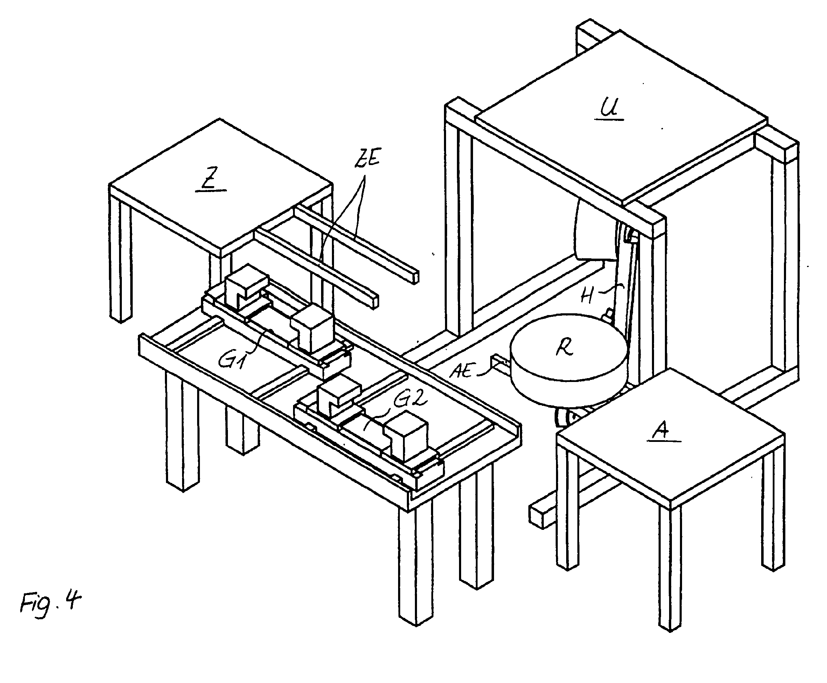

In Fig. 1 ist eine Vorrichtung U zum Anbringen von Unwuchtausgleichsgewichten schematisch in Perspektive dargestellt. Die Vorrichtung U ist zwischen einer Zuführförderlinie Z und einer Austragsförderlinie A angeordnet, die in den beiliegenden Zeichnungsfiguren schematisch als einander gegenüberstehende Tische ausgebildet sind. Bei einer praktischen Ausführung der Vorrichtung bzw. des Verfahrens können diese Tische durch kontinuierliche oder diskontinuierliche bzw. intermittierend arbeitende Fördereinrichtungen wie Förderbänder, Förderrollen usw. gebildet sein. In diesem Fall ist bevorzugt, daß die Zuführförderlinie Z und die Austragsförderlinie A parallel zueinander mit einem solchen Abstand angeordnet sind, daß die Unwuchtausgleichsvorrichtung U dazwischen plaziert werden kann.

Hinsichtlich der Zuführförderlinie Z und der Austragsförderlinie A ist noch zu bemerken, daß diese so ausgestaltet sein müssen, daß der nachstehend noch näher erläuterte Roboter H der Unwuchtausgleichsvorrichtung U ein auszuwuchtendes Rad R mit vertikaler Radachse an der Zuführförderlinie Z von unten ergreifen und das Rad R mit vertikaler Radachse in der Weise wieder abgeben kann, wie die Handhabungseinrichtung das Rad R an der Zuführförderlinie Z ergriffen hat (vgl. Fig. 1, 4). Dies kann beispielsweise dadurch bewirkt werden, daß die Zuführförderlinie Z und die Austragsförderlinie A jeweils in dem Bereich des Ergreifens bzw. Abgebens des auszuwuchtenden bzw. abzugebenden Rades R durch den Roboter H mit zwei zueinander beabstandeten Fördereinheiten ZE bzw. AE versehen sind, wie es beispielsweise in den Fig. 1 bis 5 schematisch dargestellt ist.

Wie bereits vorstehend dargelegt worden ist, ist zwischen der Zuführförderlinie Z und der Austragsförderlinie A die Unwuchtausgleichsvorrichtung U angeordnet. Die Unwuchtausgleichsvorrichtung U besteht aus der Handhabungseinrichtung H sowie einem ersten und einem zweiten Gewichteinsetzwerkzeug G1, G2.

Bei dem Roboter H handelt es sich um einen Industrieroboter mit zumindest drei Drehachsen, der in der Lage ist, ein auszuwuchtendes Rad R, welches durch die Zuführförderlinie Z herantransportiert worden ist, im Bereich der Zuführfördereinheit ZE von unten zu ergreifen. Der Roboter H ist weiterhin in der Lage, das so mit einer vertikalen Radachse ergriffene Rad R um 90 ° in der Weise zu drehen, daß die Radachse horizontal verläuft. An seinem Greifende kann der Industrieroboter H mit einem Antriebsmotor versehen sein, der in der Lage ist, infolge der Steuerbefehle einer nicht weiter dargestellten Steuereinrichtung das auszuwuchtende Rad R in dem jeweiligen Gewichteeinsetzwerkzeug G1, G2 in die Ausgleichsposition(en) einzudrehen.

Die Gewichteeinsetzwerkzeuge G1, G2 sind in gleicher horizontaler Ebene nebeneinander angeordnet, wie es in den Zeichnungsfiguren 1 bis 5 gezeigt ist. Das erste Gewichteeinsetzwerkzeug G1 kann beispielsweise zum Einsetzen von geteilten Gewichten, d. h. Gewichten, die aus Feder und Ausgleichsgewicht bestehen, verwendet werden, wogegen das zweite Gewichteeinsetzwerkzeug G2 für Klebegewichte eingesetzt werden kann.

Die Gewichteeinsetzwerkzeuge G1, G2 bestehen jeweils aus zwei Einzelwerkzeugen, die auf einem gemeinsamen Träger zueinanderweisend mit einem Abstand angeordnet sind. Der Abstand ist dabei so gewählt, daß auszuwuchtende Räder R mit unterschiedlichen Reifenbreiten durch den Roboter H zwischen den Einzelwerkzeugen angeordnet werden können, ohne daß sie dabei die Einzelwerkzeuge berühren.

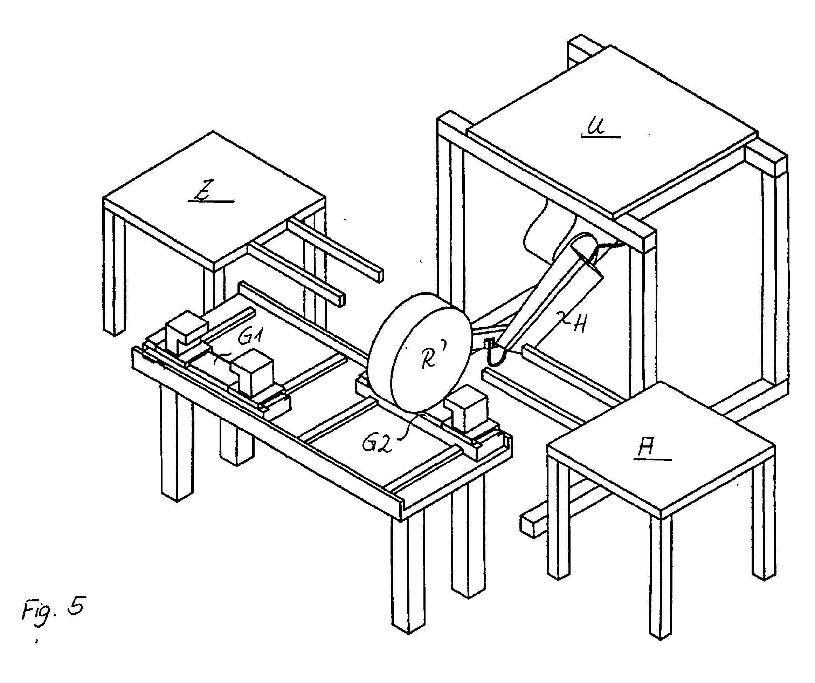

Wie weiterhin aus den Zeichnungsfiguren hervorgeht, sind die Gewichteeinsetzwerkzeuge G1, G2 entlang von Führungsschienen F in einer horizontalen Ebene in Richtung auf den Roboter H reversibel verschiebbar, um unterschiedliche Positionen einnehmen zu können. Beispielsweise kann dies vorgesehen sein, um das jeweilige Gewichteeinsetzwerkzeug G1, G2 in eine Außerbetriebsposition bzw. in eine Betriebsposition verschieben zu können, wie es in der Fig. 2 für das Gewichteeinsetzwerkzeug G1 und in Fig. 5 für das Gewichteeinsetzwerkzeug G2 gezeigt ist.

Die Arbeitsweise der beschriebenen Vorrichtung bzw. die Vorgehensweise bei dem beschriebenen Verfahren ist wie folgt:

Ein auszuwuchtendes Rad R, dessen Unwucht in einer stromaufwärts der Unwuchtsausgleichvorrichtung U an der Zuführförderlinie Z angeordneten Unwuchtmeßstation erfaßt worden ist, wird mittels der Zuführförderlinie Z in einer Position, bei der die Radachse im wesentlichen vertikal verläuft, an die durch die Zuführfördereinheiten ZE gebildete Übergabestelle transportiert. Dort wird das auszuwuchtende Rad R durch den Roboter H von unten definiert erfaßt und von den Zuführfördereinheiten ZE abgehoben. Anschließend wird das auszuwuchtende Rad R in der Weise durch den Roboter H gedreht, daß die Radachse im wesentlichen horizontal verläuft. Gleichzeitig oder anschließend wird das auszuwuchtende Rad R dem ersten Gewichteeinsetzwerkzeug G1 zugeführt, wobei ebenfalls gleichzeitig oder kurz danach das Eindrehen in die Ausgleichsposition in der ersten Ausgleichsebene erfolgt. Anschließend wird das Rad R von dem Roboter H an das linke Einzelwerkzeug des ersten Gewichteeinsetzwerkzeuges G1 zugeführt, um das jeweilige Ausgleichsgewicht der ersten Art in dieser Ausgleichsebene anbringen zu können. Anschließend verfährt der Roboter H das Rad R zu dem rechten Einzelwerkzeug des ersten Gewichteeinsetzwerkzeuges G1, um in der zweiten Ausgleichsebene das zweite Unwuchtausgleichsgewicht anbringen zu können. Hierbei oder kurz davor oder kurz danach kann das Rad R durch den Roboter H in die.Ausgleichsposition eingedreht werden.

Nachdem die Ausgleichsgewichte an dem Rad R angebracht worden sind, wird dieses durch den Roboter H zu der Austragsförderlinie A verfahren und an der Übergabestelle, die durch die Austragseinheiten AE gebildet ist, an die Austragsförderlinie A übergeben. Hierbei wird das Rad R in der Weise gedreht, daß die horizontale Radachse nunmehr vertikal verläuft und diejenige Radflanke nach oben weist, die ebenfalls bei dem Fördervorgang durch die Zuführförderlinie Z nach oben weist. Anschließend wird das Rad R von dem Roboter H freigegeben und durch die Austragsförderlinie A ausgetragen.

Wird nun ein zweites Rad R' mit einer anderen Felgenkonstruktion der Unwuchtausgleichsvorrichtung U zugeführt, so kann das erste Gewichteeinsetzwerkzeug G1 in eine Außerbetriebsposition entlang der Führungsschienen F verfahren werden, wogegen das zweite Gewichteeinsetzwerkzeug G2 entlang seiner Führungsschienen F in eine Betriebsposition verfahren werden kann (vgl. Fig. 5). Anschließend wird das zweite Rad R', das ebenfalls die Unwuchtmeßeinrichtung, die in Zuführförderrichtung stromaufwärts.der Unwuchtausgleichsvorrichtung U angeordnet ist, durch den Roboter H von der Zuführfördereinrichtung Z entnommen und dem zweiten Gewichteeinsetzwerkzeug G2 zugeführt, welches in identischer Weise zu dem ersten Gewichteeinsetzwerkzeug G1 die Gewichte an dem auszuwuchtenden Rad R' anbringt. Anschließend wird das zweite Rad R' an die Austragsförderlinie A mittels des Roboters H abgegeben.

## Patentansprüche

1. Verfahren zum Anbringen von Unwuchtausgleichsgewichten an einem Fahrzeugrad, bei dem mit wenigstens einem Gewichteeinsetzwerkzeug ein Unwuchtausgleichsgewicht am in seine Ausgleichswinkellage eingedrehten Rad befestigt wird,
**dadurch gekennzeichnet, dass** das auszuwuchtende Rad mittels eines Roboters (H) mit wenigstens drei Drehachsen erfasst und in der eingedrehten Ausgleichswinkellage an das jeweilige Gewichteeinsetzwerkzeug herangeführt wird.

2. Verfahren nach Anspruch 1,
**dadurch gekennzeichnet, dass** das Rad von dem Roboter in die Ausgleichswinkellage eingedreht und/oder bewegt wird.

3. Verfahren nach Anspruch 1 oder 2,
**dadurch gekennzeichnet, dass** der Roboter auszuwuchtende Räder zu wenigstens zwei Gewichteeinsetzwerkzeugen zum Einsetzen von Unwuchtausgleichsgewichten unterschiedlicher Art bewegt.

4. Verfahren nach einem der Ansprüche 1 bis 3,
**dadurch gekennzeichnet, dass** das auszuwuchtende Rad mit im Wesentlichen vertikaler Radachse entlang einer Zuführförderlinie zu dem sentlichen vertikaler Radachse entlang einer Zuführförderlinie zu dem Roboter geführt, von diesem ergriffen und mit im Wesentlichen horizontal verlaufender Radachse den Gewichteeinsetzwerkzeugen zugeführt wird.

5. Verfahren nach Anspruch 1 oder 4,
**dadurch gekennzeichnet, dass** der Roboter das auszuwuchtende Rad in einer Zuführförderlinie zu dem Roboter definiert ergreift.

6. Verfahren nach einem der Ansprüche 1 bis 5,
**dadurch gekennzeichnet, dass** der Roboter das Rad mit im Wesentlichen vertikal verlaufender Radachse an eine Austragsförderlinie nach dem Durchlauf durch die Gewichteeinsetzwerkzeuge abgibt.

7. Verfahren nach einem der Ansprüche 3 bis 6,
**dadurch gekennzeichnet, dass** der Roboter das Rad zu dem ersten oder zweiten Gewichteeinsetzwerkzeug, die nebeneinander angeordnet sind, bewegt.

8. Verfahren nach einem der Ansprüche 1 bis 7,
**dadurch gekennzeichnet, dass** der Roboter das Rad zu den Gewichteeinsetzwerkzeugen, die in ihrer vorzugsweise horizontalen Position zueinander einstellbar ausgeführt sind, bewegt.

9. Vorrichtung zum Anbringen von Unwuchtausgleichsgewichten an ein Fahrzeugrad zur Durchführung eines Verfahrens nach einem der Ansprüche 1 bis 8, mit wenigstens einem Gewichteeinsetzwerkzeug (G1, G2) zum Befestigen eines Unwuchtausgleichsgewichts am in seine Ausgleichswinkellage gebrachten Rad (R; R'),
**dadurch gekennzeichnet, dass** ein Roboter (H) mit wenigstens drei Drehachsen vorhanden ist, welcher ausgebildet ist, das Rad (R; R') in seiner Ausgleichswinkellage an das wenigstens eine Gewichteeinsetzwerkzeug (G1, G2) heranzuführen.

10. Vorrichtung nach Anspruch 9,
**dadurch gekennzeichnet, dass** wenigstens ein zweites Gewichteeinsetzwerkzeug (G2) für eine zweite Art von Unwuchtausgleichsgewichten vorgesehen ist, zu dem der Roboter (H) das auszuwuchtende Rad (R; R') bewegen kann.

11. Vorrichtung nach Anspruch 9 oder 10,
**dadurch gekennzeichnet, dass** der Roboter (H) ausgebildet ist, das Rad (R; R') aus einer Zuführförderlinie (Z) mit im Wesentlichen vertikaler Radachse zu entnehmen und mit im Wesentlichen horizontaler Radachse den Gewichteeinsetzwerkzeugen (G1, G2) zuzuführen.

12. Vorrichtung nach Anspruch 11,
**dadurch gekennzeichnet, dass** der Roboter (H) ausgebildet ist, das Rad (R; R') in der Zuführförderlinie (Z) definiert zu ergreifen.

13. Vorrichtung nach einem der Ansprüche 9 bis 12,
**dadurch gekennzeichnet, dass** der Roboter (H) ausgebildet ist, das Rad (R; R') mit im Wesentlichen vertikaler Radachse an eine Austragsförderlinie (A) nach dem Durchlauf durch die Gewichteeinsetzwerkzeuge (G1, G2) abzugeben.

14. Vorrichtung nach Anspruch 13,
**dadurch gekennzeichnet, dass** die Austragsförderlinie (A) mit einem Abstand parallel zu der Zuführförderlinie (Z) verläuft.

15. Vorrichtung nach Anspruch 14,
**dadurch gekennzeichnet, dass** in dem Abstand zwischen der Austragsförderlinie (A) und der Zuführförderlinie (Z) die Gewichteeinsetzwerkzeuge (G1, G2) angeordnet sind.

16. Vorrichtung nach einem der Ansprüche 9 bis 15,
**dadurch gekennzeichnet, dass** der Roboter (H) mit einer Steuereinrichtung verbunden ist, die ausgesbildet ist, die Ausgleichsdaten für ein auszuwuchtendes Rad (R; R') von einer Unwuchtmesseinrichtung zu empfangen und den Betrieb des Roboters (H) zu steuern.

17. Vorrichtung nach einem der Ansprüche 9 bis 16,
**dadurch gekennzeichnet, dass** der Roboter (H) mit einem Antrieb zum Eindrehen des Rades (R; R') in eine Ausgleichsposition versehen ist.

18. Vorrichtung nach einem der Ansprüche 10 bis 17,
**dadurch gekennzeichnet, dass** das erste und das zweite Gewichteeinsetzwerkzeug (G1, G2) nebeneinander angeordnet sind.

19. Vorrichtung nach einem der Ansprüche 10 bis 18,
**dadurch gekennzeichnet, dass** das erste und das zweite Gewichteeinsetzwerkzeug (G1, G2) in ihrer vorzugsweise horizontalen Position einstellbar sind.

## Claims

1. A method of fitting balancing weights to a vehicle wheel, in which a balancing weight is secured to the wheel which is rotated into its balancing angular position with at least one weight fitting tool,
**characterised in that** the wheel to be balanced is engaged by means of a robot (H) having at least three axes of rotation and is moved to the respective weight fitting tool in the balancing angular position into which it is rotated.

2. A method according to claim 1 **characterised in that** the wheel is moved and/or rotated into the balancing angular position by the robot.

3. A method according to claim 1 or claim 2 **characterised in that** the robot moves wheels to be balanced to at least two weight fitting tools for fitting balancing weights of differing kinds.

4. A method according to one of claims 1 to 3 **characterised in that** the wheel to be balanced is guided with a substantially vertical wheel axis along a feed conveyor line to the robot, is engaged thereby and is fed with the wheel axis extending substantially horizontally to the weight fitting tools.

5. A method according to claim 1 or claim 4 **characterised in that** the robot grips the wheel which is to be balanced in defined relationship in a feed conveyor line with respect to the robot.

6. A method according to one of claims 1 to 5 **characterised in that** the robot delivers the wheel with the wheel axis extending substantially vertically to a discharge conveyor line after passing through the weight fitting tools.

7. A method according to one of claims 3 to 6 **characterised in that** the robot moves the wheel to the first or second weight fitting tool which are arranged in mutually juxtaposed relationship.

8. A method according to one of claims 1 to 7 **characterised in that** the robot moves the wheel to the weight fitting tools which are adapted to be adjustable relative to each other in their preferably horizontal position.

9. Apparatus for fitting balancing weights to a vehicle wheel for carrying out a method according to one of claims 1 to 8 comprising at least one weight fitting tool (G1, G2) for securing a balancing weight to the wheel (R; R') which has been moved into its balancing angular position,
**characterised in that** there is a robot (H) having at least three axes of rotation, which is adapted to move the wheel (R; R') in its balancing angular position to the at least one weight fitting tool (G1, G2).

10. Apparatus according to claim 9 **characterised in that** there is provided at least one second weight fitting tool (G2) for a second kind of balancing weights, to which the robot (H) can move the wheel (R; R') to be balanced.

11. Apparatus according to claim 9 or claim 10 **characterised in that** the robot (H) is adapted to remove the wheel (R; R') from a feed conveyor line (Z) with a substantially vertical wheel axis and to feed it to the weight fitting tools (G1, G2) with a substantially horizontal wheel axis.

12. Apparatus according to claim 11 **characterised in that** the robot (H) is adapted to grip the wheel (R; R') in defined relationship in the feed conveyor line (Z).

13. Apparatus according to one of claims 9 to 12 **characterised in that** the robot (H) is adapted to deliver the wheel (R; R') with a substantially vertical wheel axle to a discharge conveyor line (A) after passing through the weight fitting tools (G1, G2).

14. Apparatus according to claim 13 **characterised in that** the discharge conveyor line (A) extends at a spacing parallel to the feed conveyor line (Z).

15. Apparatus according to claim 14 **characterised in that** the weight fitting tools (G1, G2) are arranged in the spacing between the discharge conveyor line (A) and the feed conveyor line (Z).

16. Apparatus according to one of claims 9 to 15 **characterised in that** the robot (H) is connected to a control device which is adapted to receive the balancing data for a wheel (R; R') to be balanced from an unbalance measuring device and to control operation of the robot (H).

17. Apparatus according to one of claims 9 to 16 **characterised in that** the robot (H) is provided with a drive for rotating the wheel (R; R') into a balancing position.

18. Apparatus according to one of claims 10 to 17 **characterised in that** the first and second weight fitting tools (G1, G2) are arranged in mutually juxtaposed relationship.

19. Apparatus according to one of claims 10 to 18 **characterised in that** the first and second weight fitting tools (G1, G2) are adjustable in their preferably horizontal position.

## Revendications

1. Procédé pour mettre des masselottes de compensation du balourd sur une roue de véhicule, dans lequel on fixe par au moins un outil d'insertion d'une masselotte une masselotte de compensation du balourd sur la roue mise par rotation en sa position angulaire de compensation,
**caractérisé en ce que** l'on prend la roue à équilibrer au moyen d'un robot (H) ayant au moins trois axes de rotation et on la met dans la position angulaire en rotation de compensation sur l'outil d'insertion d'une masselotte.

2. Procédé suivant la revendication 1, **caractérisé en ce que** l'on fait tourner ou on déplace la roue par le robot pour l'amener dans la position angulaire de compensation.

3. Procédé suivant la revendication 1 ou 2, **caractérisé en ce que** le robot déplace des roues à équilibrer vers au moins deux outils d'insertion d'une masselotte pour insérer des masselottes de compensation du balourd de types différents.

4. Procédé suivant l'une des revendications 1 et 3,
**caractérisé en ce que** l'on guide la roue à équilibrer, dont l'axe est sensiblement vertical, le long d'une ligne de convoyeur d'apport menant au robot, on la prend par celui-ci et on l'apporte, alors que l'axe de la roue s'étend sensiblement horizontalement, aux outils d'insertion d'une masselotte.

5. Procédé suivant la revendication 1 ou 4, **caractérisé en ce que** le robot prend la roue à équilibrer suivant une ligne de transport définie par rapport au robot.

6. Procédé suivant l'une des revendications 1 à 5,
**caractérisé en ce que** le robot cède la roue, dont l'axe s'étend sensiblement verticalement, à une ligne de convoyeur de sortie après passage dans les outils d'insertion d'une masselotte.

7. Procédé suivant l'une des revendications 3 à 6,
**caractérisé en ce que** le robot déplace la roue vers le premier ou le deuxième outil d'insertion d'une masselotte, qui sont disposés côte à côte.

8. Procédé suivant l'une des revendications 1 à 7,
**caractérisé en ce que** le robot déplace la roue vers les outils d'insertion de masselotte dont les positions, de préférence horizontales, sont réglables l'une par rapport à l'autre.

9. Dispositif pour mettre des masselottes de compensation du balourd sur une roue de véhicule pour la mise en oeuvre d'un procédé suivant l'une des revendications 1 à 8, comprenant au moins un outil (G1, G2) d'insertion d'une masselotte pour fixer une masselotte de compensation du balourd à une roue (R, R') mise en sa position angulaire de compensation,**caractérisé en ce qu'**il y a un robot (H) ayant au moins trois axes de rotation et constitué de manière à amener la roue (R, R') en sa position angulaire de compensation sur le au moins un outil (G1, G2) d'insertion d'une masselotte.

10. Dispositif suivant la revendication 9, **caractérisé en ce qu'**il est prévu au moins un deuxième outil (G2) d'insertion d'une masselotte pour un deuxième type de masselotte de compensation de balourd, outil vers lequel le robot peut déplacer la roue (R, R') à équilibrer.

11. Procédé suivant la revendication 9 ou 10, **caractérisé en ce que** le robot (H) est constitué de manière à prélever la roue (R, R') d'une ligne (Z) de convoyeur d'apport alors que l'axe de la roue est sensiblement vertical, et à l'apporter aux outils (G1, G2) d'insertion d'une masselotte alors que l'axe de la roue est sensiblement horizontal.

12. Procédé suivant la revendication 11, **caractérisé en ce que** le robot (H) est constitué de manière à prendre la roue (R, R') d'une manière définie dans la ligne (Z) de convoyeur d'apport.

13. Procédé suivant l'une des revendications 9 à 12, **caractérisé en ce que** le robot (H) est constitué de manière à retirer la roue (R, R'), alors que son axe est sensiblement vertical, sur une ligne (A) de convoyeur de sortie, après le passage dans les outils (G1, G2) d'insertion d'une masselotte.

14. Procédé suivant la revendication 13, **caractérisé en ce que** la ligne (A) de convoyeur de sortie s'étend parallèlement à la ligne (Z) de convoyeur d'apport en en étant à distance.

15. Procédé suivant revendication 14, **caractérisé en ce que** les outils (G1; G2) d'insertion d'une masselotte sont disposés dans l'intervalle compris entre la ligne (A) de convoyeur de sortie et la ligne (Z) de convoyeur d'apport.

16. Procédé suivant l'une des revendications 9 à 15, **caractérisé en ce que** le robot (H) est relié à un dispositif de commande, qui est constitué de manière à recevoir les données de compensation pour une roue (R, R') à équilibrer d'un dispositif de mesure du balourd et à commander le fonctionnement du robot (H).

17. Procédé suivant l'une des revendications 9 à 16, **caractérisé en ce que** le robot (H) est muni d'un entraînement pour mettre la roue (R, R') par rotation dans une position de compensation.

18. Procédé suivant l'une des revendications 10 à 17, **caractérisé en ce que** le premier et le deuxième outils (G1, G2) d'insertion d'une masselotte sont disposés côte à côte.

19. Procédé suivant l'une des revendications 10 à 18, **caractérisé en ce que** le premier et le deuxième outils (G1, G2) d'insertion d'une masselotte sont réglables dans leur position, de préférence horizontale.
